# EUROPÄISCHE PATENTSCHRIFT

(11) **EP 2 966 370 B1**
(45) Veröffentlichungstag und Bekanntmachung des Hinweises auf die Patenterteilung: **24.05.2017**
(21) Anmeldenummer: 15405039.7
(22) Anmeldetag: 11.06.2015
(51) Int. Cl.: F24F 5/00, F24D 3/16

(54) **VERFAHREN ZUM KÜHLEN ODER HEIZEN EINES RAUMES**
METHOD FOR COOLING OR HEATING A SPACE
PROCÉDÉ DE REFROIDISSEMENT OU DE CHAUFFAGE D'UNE PIÈCE

(30) Priorität: 17.06.2014 CH 9132014
(43) Veröffentlichungstag der Anmeldung: 13.01.2016
(73) Patentinhaber: Barcol-Air Group AG, 8603 Schwerzendbach (CH)
(72) Erfinder: Reetz, Ulrich, 65582 Dietz (DE)
(74) Vertreter: Wagner, Wolfgang Heribert

(56) Entgegenhaltungen:
- EP-A1- 1 422 482
- EP-A2- 1 279 899
- CH-B1- 697 823

## Beschreibung

### Technisches Gebiet

Die Erfindung betrifft ein Verfahren zum Heizen und vor allem zum Kühlen eines Raumes durch ein von einem Wärmeträgermedium durchströmtes Deckenelement, bei welchem die thermische Trägheit der Raumdecke ausgenützt wird.

### Stand der Technik

Ein gattungsgemässes Verfahren mit den Merkmalen des Oberbegriffs von Anspruch 1 ist aus CH 697 823 B1 bekannt. Der untere Flüssigkeitskreis und der obere Flüssigkeitskreis des dort beschriebenen Deckenelements können jeweils unabhängig voneinander zwischen den Vorlauf und den Rücklauf geschaltet werden, sodass im Gebrauch eine aktive Phase, in der das Wärmeträgermedium nur durch den unteren Flüssigkeitskreis geleitet und der Raum gekühlt wird und eine Ladephase, in der das Wärmeträgermedium ganz oder teilweise durch den oberen Flüssigkeitskreis geleitet und die Raumdecke gekühlt wird, abwechseln. Eine Entladung der Raumdecke ist jedoch nur in den Rücklauf, d.h. zur Absenkung der Rücklauftemperatur möglich. Eine direkte Kühlung des Raumes über die Flüssigkeitskreise bei Entladung der Raumdecke ist nicht vorgesehen.

Gemäss EP 1 422 482 A1 liegen der mit dem Vorlauf verbundene obere Flüssigkeitskreis und der mit dem Rücklauf verbundene untere Flüssigkeitskreis in Reihe. Während einer aktiven Phase ist die Durchflussrate hoch, sodass die Raumdecke verhältnismässig wenig Wärme aufnimmt und während einer Ladephase niedrig, sodass die Wärmeaufnahme vor allem im oberen Flüssigkeitskreis erfolgt und die Raumdecke stärker gekühlt wird. Der Entladung der Raumdecke kommt lediglich eine unterstützende Funktion während der aktiven Phase zu. Eine Kühlung des Raumes ausschliesslich durch dieselbe ist nicht vorgesehen.

Ähnlich ist das aus EP 1 862 742 A1 bekannte Verfahren, wo zur Vermeidung einer Unterkühlung während der Ladephase der untere Flüssigkeitskreis überbrückt werden kann.

Gemäss DE 44 03 528 A1 erfolgt die Entladung der Raumdecke über Konvektion. Sie hat lediglich unterstützende Funktion.

### Darstellung der Erfindung

Der Erfindung liegt die Aufgabe zu Grunde, ein gattungsgemässes Verfahren anzugeben, bei dem die Ausnutzung der Entladung der vorgekühlten Raumdecke für die Heizung oder Kühlung des Raumes spürbar verbessert ist.

Diese Aufgabe wird durch die Erfindung, wie sie in den Ansprüchen gekennzeichnet ist, gelöst. Erfindungsgemäss erfolgt die Entladung der Raumdecke direkt in den der Raumkühlung oder -heizung dienenden unteren Flüssigkeitskreis, und zwar ohne eine Energie erfordernde gezielte thermische Einwirkung auf das Wärmeträgermedium durch ein Heiz- oder Kühlaggregat. Die Ladung der Raumdecke kann so gezielt und vollständig ausgenützt werden, sodass bei tiefen Nachttemperaturen und begrenztem Kühlbedarf während des Tages oft auf eine energieintensive gezielte Kühlung des Wärmeträgermediums verzichtet werden kann. Aber auch in weniger günstigen Fällen kann der Energieverbrauch für gezielte thermische Einwirkung auf das Wärmeträgermedium spürbar gesenkt werden.

### Kurze Beschreibung der Zeichnungen

Im folgenden wird die Erfindung anhand von Figuren, welche lediglich Aus führungsbeispiele darstellen, näher erläutert.

Es zeigen
- Fig. 1a: eine Vorrichtung zur Durchführung des erfindungsgemässen Verfahrens, gemäss einer ersten Ausführungsform in der aktiven Phase,
- Fig. 1b: die Vorrichtung nach Fig. 1a in der Ladephase,
- Fig. 1c: die Vorrichtung nach Fig. 1a in der Entladephase,
- Fig. 2a: eine Vorrichtung zur Durchführung des erfindungsgemässen Verfahrens gemäss einer zweiten Ausführungsform in der aktiven Phase,
- Fig. 2b: die Vorrichtung nach Fig. 2a in der Ladephase,
- Fig. 2c: die Vorrichtung nach Fig. 2a in der Entladephase,
- Fig. 3a: eine Vorrichtung zur Durchführung des erfindungsgemässen Verfahrens gemäss einer dritten Ausführungsform in der aktiven Phase,
- Fig. 3b: die Vorrichtung nach Fig. 3a in der Ladephase und
- Fig. 3c: die Vorrichtung nach Fig. 3a in der Entladephase.

### Wege zur Ausführung der Erfindung

Im folgenden ist beispielhaft von Kühlung die Rede, was auch der praktisch bedeutendere Fall ist. Es liegt jedoch auf der Hand, dass das erfindungsgemässe Verfahren und die Vorrichtungen zu seiner Durchführung ebenso gut zum Heizen eingesetzt werden können.

Die Vorrichtung gemäss der ersten Ausführungsform weist einen Vorlauf 1 und einen Rücklauf 2, d.h. Rohre für ein Wärmeträgermedium auf. Der Rücklauf 2 ist mit dem Vorlauf 1 über ein Kühlaggregat 3 verbunden, welches, wenn es eingeschaltet ist, dahingehend gezielt thermisch auf das Wärmeträgermedium einwirkt, dass dasselbe von der Rücklauftemperatur auf die tiefere Vorlauftemperatur abgekühlt wird. Im Vorlauf 1 ist eine Umwälzvorrichtung angeordnet, welche hier aus einer unidirektionalen Umwälzpumpe 4 besteht, die das Wärmeträgermedium durch den Kühlkreis pumpt.

Zwischen dem Vorlauf 1 und dem Rücklauf 2 liegt mindestens ein Deckenelement 5, welches unterhalb einer Raumdecke angeordnet ist und einen unteren Flüssigkeitskreis 6 und einen oberen Flüssigkeitskreis 7 umfasst. Das Deckenelement 5 kann aus mehreren Deckenplatten bestehen, deren jede ein unteres Rohrregister und ein oberes Rohrregister umfasst, die thermisch voneinander isoliert sind und von denen das untere Rohrregister mit einer dem Raum zugewandten Raumaustauschfläche thermisch eng gekoppelt ist und das obere Rohrregister mit einer der Raumdecke zugewandten Deckenaustauschfläche, die auch mit der Raumdecke verklebt sein kann. Die unteren Rohrregister der Deckenplatten liegen in Reihe und bilden den unteren Flüssigkeitskreis 6, während die oberen Rohrregister in entsprechender Weise den oberen Flüssigkeitskreis 7 bilden. Gewöhnlich liegen mehrere Deckenelemente 5 parallel zwischen dem Vorlauf 1 und dem Rücklauf 2.

Zwischen dem unteren Flüssigkeitskreis 6 und dem Rücklauf 2 liegt ein Ventil 8, mittels dessen die Verbindung gesperrt werden kann. In entsprechender Weise liegt auch zwischen dem oberen Flüssigkeitskreis 7 und dem Rücklauf 2 ein Ventil 9. Das dem Rücklauf 2 zugewandte Ende des unteren Flüssigkeitskreises 6 ist mit dem entsprechenden Ende des oberen Flüssigkeitskreises 7 durch eine Zwischenleitung verbunden, in der eine Entladepumpe 10 liegt.

Während einer aktiven Phase, die mit der Zeit zusammenfällt, in der der Raum benützt wird - also gewöhnlich tagsüber -, ist das Kühlaggregat 3 eingeschaltet und die Umwälzpumpe 4 in Betrieb. Das Ventil 8 ist offen und das Ventil 9 geschlossen, sodass das Wärmeträgermedium vom Vorlauf 1 durch den unteren Flüssigkeitskreis 6 geleitet wird, von wo es über das Ventil 8 den Rücklauf 2 erreicht. Zirkulation des Wärmeträgermediums durch den oberen Flüssigkeitskreis 7 ist dagegen unterbunden. Es wird also, durch den unteren Flüssigkeitskreis 6, lediglich der Raum gekühlt.

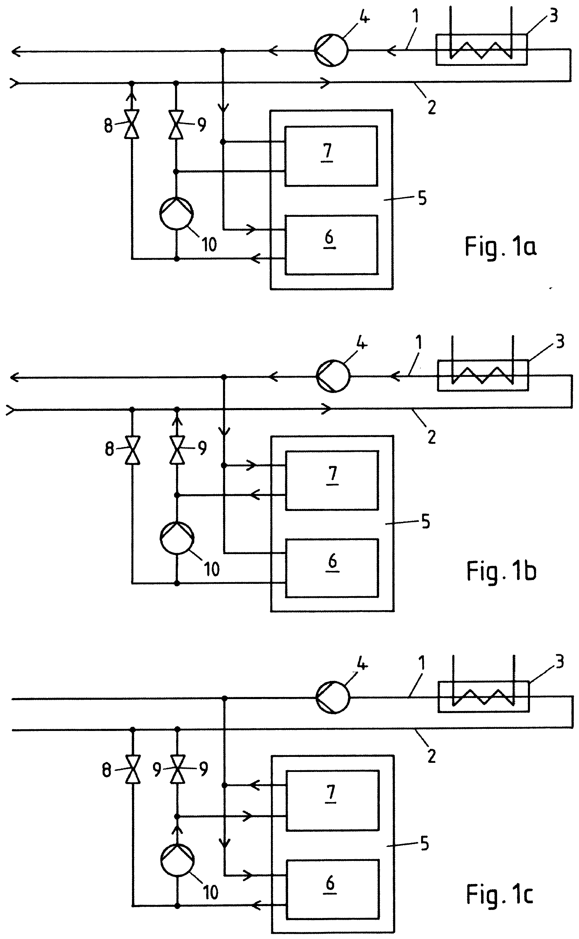

Während einer in Fig. 1b dargestellten Ladephase, in der der Raum nicht benützt wird - gewöhnlich während der Nacht - ist dagegen das Ventil 8 geschlossen und das Ventil 9 offen, sodass das Wärmeträgermedium nur durch den oberen Flüssigkeitskreis 7 geleitet wird. Das Kühlaggregat 3 und die Umwälzpumpe 4 sind in Betrieb. Dadurch wird die gewöhnlich aus Beton bestehende Raumdecke gekühlt, während der Raum nicht weiter gekühlt wird. Auf diese Weise werden die tieferen Nachttemperaturen für eine Vorkühlung oder Ladung der Raumdecke ausgenützt, während eine Unterkühlung des Raumes vermieden wird.

Die Ladung der Raumdecke wird während einer in Fig. 1c dargestellten Entladephase dazu benützt, den Raum bei abgeschaltetem Kühlaggregat 4 lediglich durch Wärmeaustausch zwischen der Raumdecke und dem Raum über den oberen Flüssigkeitskreis 7 und den unteren Flüssigkeitskreis 6 zu kühlen. Dazu werden die Ventile 8 und 9 beide geschlossen, sodass der untere Flüssigkeitskreis 6 und der obere Flüssigkeitskreis 7 einen vom Vorlauf 1 und vom Rücklauf 2 abgekoppelten geschlossenen Kreis bilden, in dem sie vom Wärmeträgermedium abwechselnd durchlaufen werden. Das Kühlaggregat 3 und die Umwälzpumpe 4 sind nicht in Betrieb.

Der geschlossene Kreislauf wird von der Entladepumpe 10 angetrieben, welche das Wärmeträgermedium durch den oberen Flüssigkeitskreis 7 und weiter durch den unteren Flüssigkeitskreis 6 pumpt, von wo es wieder die Entladepumpe 10 erreicht. Durch diesen Kreislauf des Wärmeträgermediums durch den oberen Flüssigkeitskreis 7 und den unteren Flüssigkeitskreis 6 wird Wärme vom Raum zur Raumdecke transportiert, d.h. der Raum gekühlt, während sich die Raumdecke langsam erwärmt. Diese Kühlung kann bei starker Ladung der Raumdecke für einige Zeit ausreichen. Wenn die Raumdecke so stark entladen ist, dass eine ausreichende Kühlung des Raumes nicht mehr gewährleistet ist, so kann wieder zur aktiven Kühlung gemäss Fig. 1a übergegangen werden.

Die aktive Phase und die Ladephase können durchaus überlappen oder sogar übereinstimmen, d.h. die Ventile 8 und 9 können gleichzeitig offen sein, sodass sowohl der Raum direkt gekühlt als auch die Raumdecke geladen wird. Falls mindestens eines davon als Regelventil ausgebildet ist, so kann die Kühlleistung zwischen Raum und Raumdecke gezielt verteilt werden.

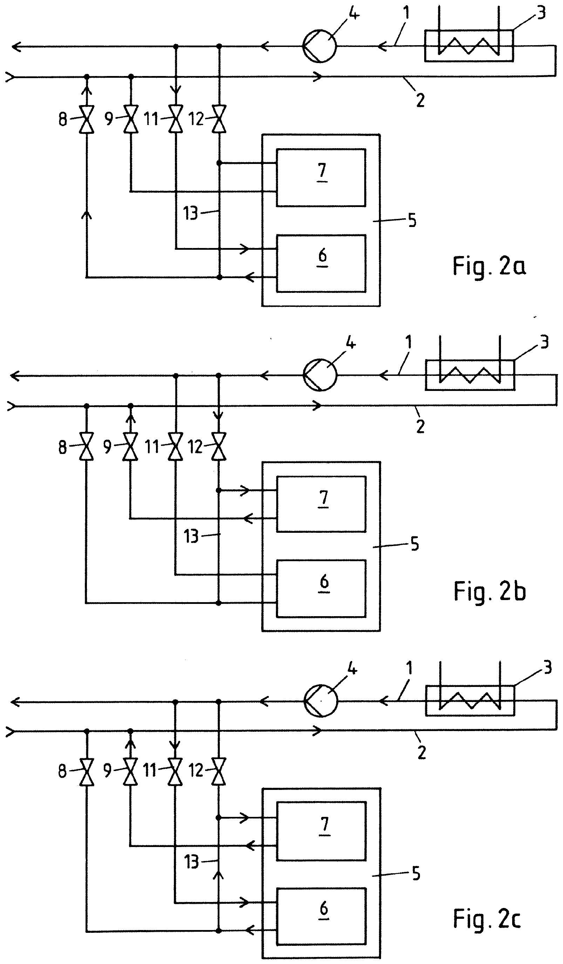

Bei einer Ausbildung der Vorrichtung zur Durchführung des Verfahrens gemäss Fig. 2a-c können die teuren Entladepumpen eingespart werden und die für die Entladung der Raumdecke erforderliche Zirkulation des Wärmeträgermediums mittels der Umwälzpumpe 4 erzeugt werden.

Dafür sind zwei weitere Ventile vorgesehen. Ein Ventil 11 liegt zwischen dem Vorlauf 1 und dem unteren Flüssigkeitskreis 6 und ein Ventil 12 zwischen dem Vorlauf 1 und dem oberen Flüssigkeitskreis 7. Ausserdem verbindet eine Überbrückungsleitung 13 das dem Vorlauf 1 zugewandte Ende des oberen Flüssigkeitskreises 7 mit dem dem Rücklauf 2 zugewandten Ende des unteren Flüssigkeitskreises 6.

In der aktiven Phase (Fig. 2a) sind die Ventile 8 und 11 offen und die Ventile 9 und 12 geschlossen. Das Kühlaggregat 3 und die Umwälzpumpe 4 sind in Betrieb. Das Wärmeträgermedium wird also vom Vorlauf 1 durch den unteren Flüssigkeitskreis 6 zum Rücklauf 2 geleitet.

Während der in Fig. 2b gezeigten Ladephase sind dagegen die Ventile 9 und 12 offen und die Ventile 8 und 11 geschlossen. Das Kühlaggregat 3 und die Umwälzpumpe 4 sind in Betrieb. Das Wärmeträgermedium wird vom Vorlauf 1 durch den oberen Flüssigkeitskreis 7 zum Rücklauf 2 geleitet.

Während der Entladephase (Fig. 2c) sind die Ventile 9 und 11 offen und die Ventile 8 und 12 geschlossen. Das Kühlaggregat 3 ist abeschaltet, doch ist die Umwälzpumpe 4 in Betrieb. Das Wärmeträgermedium gelangt vom Vorlauf 1 über das Ventil 11 in den unteren Flüssigkeitskreis 6, wird von dort über die Zwischenleitung 13 zum oberen Flüssigkeitskreis 7 geleitet und erreicht schliesslich über das Ventil 9 den Rücklauf 2. Über das Kühlaggregat 3 gelangt es wieder in den Vorlauf 1. Da das Kühlaggregat 3 abgestellt ist, erfolgt keine gezielte thermische Einwirkung auf das Wärmeträgermedium. Weiter über die Umwälzpumpe 4 erreicht es wieder die Abzweigung, die über das Ventil 11 zum unteren Flüssigkeitskreis 6 führt. Der untere Flüssigkeitskreis 6 und der obere Flüssigkeitskreis 7 sind also Teile eines geschlossenen Kreises, in dem sie abwechselnd vom Wärmeträgermedium durchlaufen werden, d.h. dasselbe strömt durch den unteren Flüssigkeitskreis 6, dann durch den oberen Flüssigkeitskreis 7 und dann wieder durch den unteren Flüssigkeitskreis 6 usw..

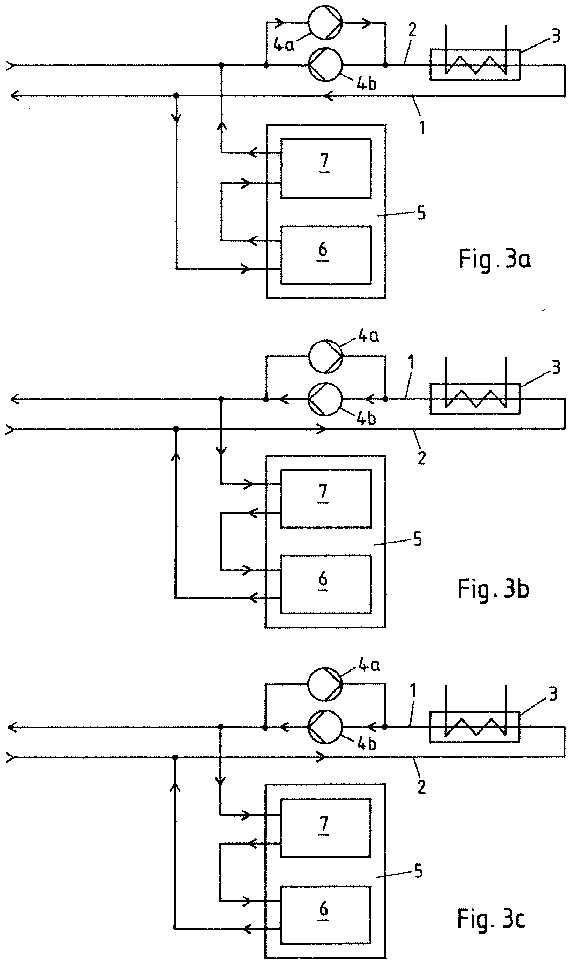

Gemäss einer in Fig. 3a-c gezeigten dritten Ausführungsform liegen der untere Flüssigkeitskreis 6 und der obere Flüssigkeitskreis 7 in Reihe zwischen dem Vorlauf 1 und dem Rücklauf 2. Die Kühlung des Raumes und die Ladung der Raumdecke sind in diesem Fall nicht zu trennen. Durch eine bidirektionale Ausbildung der Umwälzvorrichtung, die in diesem Fall aus zwei antiparallelen jeweils unidirektionalen Umwälzpumpen 4a und 4b besteht, lassen sich trotzdem eine aktive Phase, in der die Raumkühlung im Vordergrund steht und eine Ladephase, in der hauptsächlich die Raumdecke gekühlt wird, unterscheiden.

In der aktiven Phase ist die Umwälzpumpe 4a in Betrieb und die Umwälzpumpe 4b nicht. Das Kühlaggregat 3 ist eingeschaltet. Vom Vorlauf 1 wird das Wärmeträgermedium zuerst in den unteren Flüssigkeitskreis 6 geleitet, sodass es denselben mit der im Kühlaggregat 3 eingestellten Vorlauftemperatur erreicht und der Raum entsprechen stark gekühlt wird. Dabei erwärmt es sich etwas, bevor es den oberen Flüssigkeitskreis 7 erreicht, wo die Ladung der Raumdecke in einem reduziertem Ausmass erfolgt, das ausser von der Vorlauftemperatur vom Grad der Erwärmung des Wärmeträgernmediums im unteren Flüssigkeitskreis 6 abhängt, die u.a. von der Temperatur im Raum beeinflusst wird.

In der Ladephase (Fig. 3b) ist die Umwälzpumpe 4b in Betrieb und die Umwälzpumpe 4a nicht. Die Strömungsrichtung ist demnach umgekehrt. Der Vorlauf 1 von Fig. 3a wird zum Rücklauf 2 und umgekehrt. Das Wärmeträgermedium strömt vom Vorlauf 1 durch den oberen Flüssigkeitskreis 7 und erst dann durch den unteren Flüssigkeitskreis 6 und zurück zum Rücklauf 2. Das Kühlaggregat 3 ist in Betrieb. Die Raumdecke wird vom Wärmeträgermedium mit einer Temperatur erreicht, die praktisch der Vorlauftemperatur entspricht und wird entsprechend stark gekühlt. Das Wärmeträgermedium.erwärmt sich dabei, so dass es den unteren Flüssigkeitskreis 6 mit einer höheren Temperatur erreicht und der Raum wenig oder gar nicht gekühlt wird. Eine Unterkühlung des Raumes wird dadurch weitgehend vermieden.

Während der in Fig. 3c gezeigten Entladephase wird demgegenüber lediglich das Kühlaggregat 3 abgeschaltet, sodass das Wärmeträgermedium keine thermische Einwirkung erfährt. Es kühlt sich lediglich im oberen Flüssigkeitskreis 7 ab, wobei die Raumdecke sich allmählich entlädt, d.h. wärmer wird. Das so abgekühlte Wärmeträgermedium kühlt dann über den unteren Flüssigkeitskreis 6 den Raum. Die Strömungsrichtung ist dabei nicht wesentlich, sie könnte auch umgekehrt sein.

### Bezugszeichenliste

- 1: Vorlauf
- 2: Rücklauf
- 3: Kühlaggregat
- 4: Umwälzpumpe
- 4a, b: Umwälzpumpen
- 5: Deckenelement
- 6: unterer Flüssigkeitskreis
- 7: oberer Flüssigkeitskreis
- 8, 9: Ventile
- 10: Entladepumpe
- 11, 12: Ventile
- 13: Überbrückungsleitung

## Patentansprüche

1. Verfahren zum Kühlen oder Heizen eines Raumes durch ein flüssiges Wärmeträgermedium mittels einer Einrichtung, welche einen Vorlauf (1) und einen Rücklauf (2) für das Wärmeträgermedium umfasst, eine im Vorlauf (1) oder im Rücklauf (2) angeordnete Umwälzvorrichtung für das Wärmeträgermedium sowie ein Kühlaggregat (3) oder Heizaggregat, über welches der Rücklauf (2) mit dem Vorlauf (1) verbunden ist und welches geeignet ist, durch gezielte thermische Einwirkung die Temperatur des Wärmeträgermediums aus dem Rücklauf (2) auf eine von der Rücklauftemperatur abweichende Vorlauftemperatur einzustellen, sowie mindestens ein an der Raumdecke angeordnetes Deckenelement (5) mit einem unteren Flüssigkeitskreis (6) zum Wärmeaustausch mit dem Raum und einem oberhalb des unteren Flüssigkeitskreises (6) angeordneten, von demselben thermisch isolierten oberen Flüssigkeitskreis (7) zum Wärmeaustausch mit der Raumdecke, welche jeweils zwischen dem Vorlauf (1) und dem Rücklauf (2) liegen, wobei
- während einer aktiven Phase das Wärmeträgermedium vom Vorlauf (1) durch den unteren Flüssigkeitskreis (6) zum Rücklauf (2) geleitet wird,
- während einer Ladephase das Wärmeträgermedium vom Vorlauf (1) durch den oberen Flüssigkeitskreis (7) zum Rücklauf (2) geleitet wird,
**dadurch gekennzeichnet, dass** während einer Entladephase das Wärmeträgermedium ohne gezielte thermische Einwirkung in einem geschlossenen Kreislauf abwechselnd durch den oberen Flüssigkeitskreis (7) und den unteren Flüssigkeitskreis (6) geleitet wird.

2. Verfahren nach Anspruch 1, **dadurch gekennzeichnet, dass** der untere Flüssigkeitskreis (6) und der obere Flüssigkeitskreis (7) jeweils unabhängig voneinander mit dem Vorlauf (1) und/oder dem Rücklauf (2) verbindbar sind und das Wärmeträgermedium während der aktiven Phase nur durch den unteren Flüssigkeitskreis (6) geleitet wird und während der Ladephase nur durch den oberen Flüssigkeitskreis (7) geleitet wird.

3. Verfahren nach Anspruch 2, **dadurch gekennzeichnet, dass** während der Entladephase der obere Flüssigkeitskreis (7) und der untere Flüssigkeitskreis (6) direkt verbunden und vom Vorlauf (1) und/oder vom Rücklauf (2) getrennt sind und der geschlossene Kreislauf durch den oberen Flüssigkeitskreis (7) und den unteren Flüssigkeitskreis (6) durch eine Entladepumpe (10) angetrieben wird.

4. Verfahren nach Anspruch 1, **dadurch gekennzeichnet, dass** der obere Flüssigkeitskreis (7) und der untere Flüssigkeitskreis (6) in Reihe liegen.

5. Verfahren nach Anspruch 4, **dadurch gekennzeichnet, dass** während der aktiven Phase der untere Flüssigkeitskreis (6) mit dem Vorlauf (1) und der obere Flüssigkeitskreis (7) mit dem Rücklauf (2) verbunden ist.

6. Verfahren nach Anspruch 4 oder 5, **dadurch gekennzeichnet, dass** während der Ladephase der obere Flüssigkeitskreis (7) mit dem Vorlauf (1) und der untere Flüssigkeitskreis (6) mit dem Rücklauf (2) verbunden ist.

7. Verfahren nach einem der Ansprüche 1 bis 6, **dadurch gekennzeichnet, dass** während der Entladephase das Kühlaggregat (3) oder Heizaggregat abgeschaltet ist.

## Claims

1. A method for cooling or heating a room through a liquid heat transfer medium by means of a device comprising a feed line (1) and a return line (2) for the heat transfer medium, a recirculation device for the heat transfer medium disposed in the feed line (1) or in the return line (2), and a cooling unit (3) or a heating unit through which the return line (2) is connected to the feed line (1) and which is adapted to adjust the temperature of the heat transfer medium from the return line (2), by means of targeted thermal impact, to a feed temperature that is different from the return temperature, as well as at least one ceiling element (5) arranged on the ceiling of the room, having a lower liquid circuit (6) for heat exchange with the room, and an upper liquid circuit (7) arranged above the lower liquid circuit (6) and thermally isolated from the same, for heat exchange with the ceiling of the room, the circuits being respectively located between the feed line (1) and the return line (2), wherein
- during an active phase, the heat transfer medium is guided from the feed line (1) through the lower liquid circuit (6) to the return line (2),
- during a charging phase, the heat transfer medium is guided from the feed line (1) through the upper liquid circuit (7) to the return line (2),
**characterized in that** during a discharging phase, the heat transfer medium is alternately guided through the liquid circuit (7) and the lower liquid circuit (6) in a closed circuit, without any targeted thermal impact.

2. The method according to claim 1, **characterised in that** the lower liquid circuit (6) and the upper liquid circuit (7) are in each case independently connectable to the feed line (1) and/or the return line (2), and that during the active phase the heat transfer medium is guided only through the lower liquid circuit (6), and during the charging phase only through the upper liquid circuit (7).

3. The method according to claim 2, **characterised in that,** during the discharging phase, the upper liquid circuit (7) and the lower liquid circuit (6) are directly connected to each other and separated from the feed line (1) and/or from the return line (2), and the closed circuit is driven through the upper liquid circuit (7) and the lower liquid circuit (6) through a discharge pump (10).

4. The method according to claim 1, **characterised in that** the upper liquid circuit (7) and the lower liquid circuit (6) are arranged in series.

5. The method according to claim 4, **characterised in that,** during the active phase, the lower liquid circuit (6) is connected to the feed line (1) and the upper liquid circuit (7) to the return line (2).

6. The method according to claim 4 or 5, **characterised in that,** during the charging phase, the upper liquid circuit (7) is connected to the feed line (1) and the lower upper liquid circuit (6) to the return line (2).

7. The method according to any one of claims 1 to 6, **characterised in that,** during the discharging phase, the cooling unit (3) or heating unit is turned off.

## Revendications

1. Procédé de refroidissement ou de chauffage d'une pièce par un milieu caloporteur liquide au moyen d'un dispositif comprenant une ligne de départ (1) et une ligne de retour (2) pour le milieu caloporteur, un dispositif de recirculation pour le milieu caloporteur disposé dans la ligne de départ (1) ou la ligne de retour (2), et un groupe de refroidissement (3) ou groupe de chauffage au moyen duquel la ligne de retour (2) est reliée à la ligne de départ (1), et qui est adapté pour ajuster, par action thermique ciblée, la température du milieu caloporteur de la ligne de retour (2) à une température de départ différente de la température de retour, aussi qu'au moins un élément de plafond (5) disposé au plafond de la pièce, avec un circuit de liquide inférieur (6) pour l'échange thermique avec la pièce, et un circuit de liquide supérieur (7) disposé au-dessus du circuit de liquide inférieur (6) et thermiquement isolé de celui-ci, pour l'échange thermique avec le plafond de la pièce, les circuits respectivement étant disposés entre la ligne de départ (1) et la ligne de retour (2), dans lequel
- pendant une phase active, le milieu caloporteur est passé à partir de la ligne de départ (1) à travers le circuit de liquide inférieur (6) vers la ligne de retour (2),
- pendant une phase de chargement, le milieu caloporteur est passé à partir de la ligne de départ (1) à travers le circuit de liquide supérieur (7) vers la ligne de retour (2),
**caractérisé en ce que,** pendant une phase de déchargement, le milieu caloporteur est passé, en circuit fermé, en alternation à travers le circuit de liquide supérieur (7) et le circuit de liquide inférieur (6), sans aucune action thermique ciblée.

2. Procédé selon la revendication 1, **caractérisé en ce que** le circuit de liquide inférieur (6) et le circuit de liquide supérieur (7) peuvent être reliés, en chaque cas indépendamment l'un de l'autre, avec la ligne de départ (1) et/ou la ligne de retour (2), et **en ce que** le milieu caloporteur est passé, pendant la phase active, seulement à travers le circuit de liquide inférieur (6), et pendant la phase de chargement seulement à travers le circuit de liquide supérieur (7).

3. Procédé selon la revendication 2, **caractérisé en ce que,** pendant la phase de déchargement, le circuit de liquide supérieur (7) et le circuit de liquide inférieur (6) sont directement reliés l'un à l'autre, et séparés de la ligne de départ (1) et/ou de la ligne de retour (2), et le circuit fermé est alimenté à travers le circuit de liquide supérieur (7) et le circuit de liquide inférieur (6) par une pompe de décharge (10).

4. Procédé selon la revendication 1, **caractérisé en ce que** le circuit de liquide supérieur (7) et le circuit de liquide inférieur (6) sont disposés en série.

5. Procédé selon la revendication 4, **caractérisé en ce que,** pendant la phase active, le circuit de liquide inférieur (6) est relié à la ligne de départ (1), et le circuit de liquide supérieur (7) à la ligne de retour (2).

6. Procédé selon la revendication 4 ou 5, **caractérisé en ce que,** pendant la phase de chargement, le circuit de liquide supérieur (7) est relié à la ligne de départ (1), et le circuit de liquide inférieur (6) à la ligne de retour (2).

7. Procédé selon l'une quelconque des revendications 1 à 6, **caractérisé en ce que** le groupe de refroidissement (3) ou groupe de chauffage est débranché pendant la phase de déchargement.
